# EUROPÄISCHE PATENTANMELDUNG

(11) **EP 0 826 474 A1**
(43) Veröffentlichungstag der Anmeldung: **04.03.1998**
(21) Anmeldenummer: 97113733.6
(22) Anmeldetag: 08.08.1997
(51) Int. Cl.: B29C 44/56, B29C 44/58, B29C 51/14, B29C 43/18, B63B 35/79

(54) **Formwerkzeug und Verfahren zur Herstellung von Surfbrettern**

(30) Priorität: 13.08.1996 DE 19632516
(71) Anmelder: Schütz-Werke GmbH & Co. KG., D-56242 Selters (DE)
(72) Erfinder: Schütz, Udo, 56242 Selters / Ww. (DE)
(74) Vertreter: Pürckhauer, Rolf, Dipl.-Ing.

(57) **Zusammenfassung**

Gegenstand der Erfindung ist ein Formwerkzeug, das zur Herstellung von Kernen und nach einer entsprechenden Umrüstung für die Endfertigung von Surfbrettern (1) verwendbar ist.

Die Verwendung des umgerüsteten Formwerkzeugs (5) für die Fertigung von Surfbrettkörpern erfordert einen Ausgleich des Schwundes der Kerne.

Zum Schwundausgleich wird der Freiraum (32), der durch Einlegen der mit Fasermatten bzw. Fasergewebe (33) belegten und mit einem flüssigen, schäumbaren Kunststoff (34) beschichteten Kerne (2) in das Formwerkzeug (5) entsteht, durch in das Formwerkzeug (5) zusätzlich eingelegte Fasermatten (33) sowie mit schäumbarem Kunststoff (34) ausgefüllt.

Eine weitere Möglichkeit, den Schwund der Kerne (2) auszugleichen, besteht darin, die Kerne in zwei Hälften (2a,3b) zu teilen und eine dem Querschnittsprofil der Kerne (2) an der Trennstelle angepaßte Scheibe (35) mit den beiden Kernhälften zu verkleben.

Das für die Fertigung von Surfbrettkörpern eingesetzte Formwerkzeug ist wieder für die Herstellung von Kernen umrüstbar.

## Beschreibung

Die Erfindung betrifft ein Formwerkzeug zur Herstellung von Surfbrettern, das aus zwei beheizbaren Formhälften aus Metall oder Kunststoff besteht, sowie ein Herstellungsverfahren für Surfbretter unter Verwendung des Formwerkzeugs.

Bei einem aus der DE 33 29 230 C2 bekannten Verfahren zur Herstellung von Surfbrettern kommt ein Formwerkzeug dieser Art als Teil einer Vakuumtiefziehvorrichtung zum Einsatz. Die in eine Presse eingebaute Vakuumtiefziehvorrichtung umfaßt das Formwerkzeug, dessen obere und untere Formhälfte eine dem Ober- und Unterwasserschiff des Surfbretts entsprechende Formgebung aufweisen und die an eine Vakuumquelle angeschlossen sind, ferner zwei in die und aus der Presse ein- und ausfahrbare Spannrahmen zur Aufnahme der von Folienrollen abgezogenen Folienbahnen aus einem thermoplastischen, UV-beständigen Kunststoff sowie eine zwischen die Spannrahmen in die und aus der Presse ein- und ausfahrbare Heizvorrichtung zum Erwärmen der Folienbahnen bis in den plastischen Zustand.

Zur Herstellung der beiden Halbschalen der Außenhaut des Surfbretts werden zwei Folienbahnen mittels der Spannrahmen in einem bestimmten Abstand zwischen die beiden Formhälften verfahren. Anschließend wird die Heizvorrichtung zwischen die Folienbahnen gefahren, die das Folienmaterial auf die Umformtemperatur erwärmt. Sobald diese erreicht ist, werden die beiden Folienbahnen mittels der Spannrahmen zur zugehörigen Formhälfte nach oben bzw. unten bewegt und durch Unterdruckanwendung in die jeweilige Formhälfte tiefgezogen. Außerdem wird die Heizvorrichtung aus dem Raum zwischen den Formhälften entfernt.

Vor dem Einlegen des aus einem geschäumten Kunststoff, z.B. Polystyrol, vorgefertigten, mit Fasermatten bzw. Fasergewebe ummantelten Kerns in die untere Formhälfte des in eine Presse eingebauten Formwerkzeugs wird zur Herstellung der Tragschicht des Surfbrettes eine flüssige Kunstharz-Härtermischung, der ein Treibmittel zugesetzt ist, auf die Kernoberfläche aufgebracht.

Nach dem Einlegen des derart vorbereiteten Kerns in das Formwerkzeug wird die Presse geschlossen. Durch den Druck der Presse und das Schäumen des Kunstharzes verteilt sich dasselbe vollkommen in dem Raum zwischen dem Schaumkern und den beiden Halbschalen und härtet zu einer massiven, faserverstärkten Tragschicht aus einer homogenen Kunstharzmatrix aus, die mit dem Schaumkern und den Halbschalen der Außenhaut eine feste Verbindung eingeht. Ein derart hergestellter Brettkörper verbleibt nur wenige Minuten in dem Formwerkzeug der Presse, und nach Entnahme des Brettes aus dem geöffneten Formwerkzeug härtet das Schalenlaminat bei Raumtemperatur aus.

Für dieses bekannte Fertigungsverfahren für Surfbretter werden ein Formwerkzeug für die Herstellung der Kerne und ein weiteres Formwerkzeug für das Vakuumtiefziehen der beiden Schalen der Außenhaut und das Verpressen der Schalen mit dem vorgefertigten, mit Fasermatten bzw. Fasergewebe ummantelten und mit einem flüssigen Kunstharz beschichteten Kern zu dem Brettkörper benötigt.

Der erforderliche Einsatz von zwei Formwerkzeugen für jeden zu fertigenden Surfbretttyp bedingt insbesondere bei kleineren Stückzahlen hohe Investitions- und Herstellungskosten.

Der Erfindung liegt die Aufgabe zugrunde, ein Formwerkzeug und ein Herstellungsverfahren zu entwickeln, die es ermöglichen, die Vorfertigung der Kerne für Surfbretter und die Endfertigung der Surfbrettkörper mit einem Formwerkzeug bei einer entsprechenden Umrüstung des Werkzeugs für den jeweiligen Fertigungsvorgang durchzuführen.

Diese Aufgabe ist erfindungsgemäß gelöst durch ein Formwerkzeug mit den Merkmalen des Patentanspruchs 1 sowie das Herstellungsverfahren nach Patentanspruch 7.

Das Formwerkzeug sowie das Herstellungsverfahren gemäß der Erfindung ermöglichen es, die Kerne für ein bestimmtes Surfbrettmodell mit einem entsprechend dem Modell ausgelegten Formwerkzeug vorzufertigen und nach einer entsprechenden Umrüstung des Werkzeugs mit diesem die kompletten Surfbrettkörper herzustellen. Es besteht ferner die Möglichkeit, das für die Surfbrettfertigung eingesetzte Formwerkzeug wieder für die Kernherstellung umzurüsten. Die Verwendung eines Formwerkzeugs für die Vorfertigung der Kerne und die Endfertigung der Surfbrettkörper führt zu einer erheblichen Einsparung an Investitions- und Betriebskosten und zu einer Senkung der Herstellungskosten.

Die Erfindung ist nachstehend anhand schematischer Zeichnungsfiguren erläutert, die folgendes darstellen:
- Fig. 1: einen Surfbrettkörper in perspektivischer Darstellung,
- Fig. 2: einen Querschnitt des Surfbrettkörpers in vergrößerter Darstellung,
- Fig. 3: ein in eine Dampfkammer eingebautes Formwerkzeug zur Herstellung von Schaumkernen für Surfbretter im Querschnitt,
- Fig. 4: eine Düse zum Einblasen von Heizdampf in das Formwerkzeug gemäß Ausschnitt IV der Fig. 3 in vergrößerter Darstellung,
- Fig. 5: eine Querschnittsdarstellung des für die Herstellung von Surfbrettkörpern umgerüsteten Formwerkzeugs,
- Fig. 6: einen aufgebohrten Verschlußstopfen in vergrößerter Darstellung gemäß Ausschnitt VI der Fig. 5,
- Fig. 7: einen Teillängsschnitt des Formwerkzeugs zur Herstellung von Brettkörpern mit einem eingelegten Kern, dessen Bugbereich zum Ausgleich des Schwundes mit einem in die Form eingelegten Verstärkungsgewebe sowie Kunststoff-Hartschaum ausgefüllt ist, und
- Fig. 8: eine perspektivische Darstellung eines auseinandergeschnittenen Kerns mit einer eingeklebten Scheibe als Schwundzugabe.

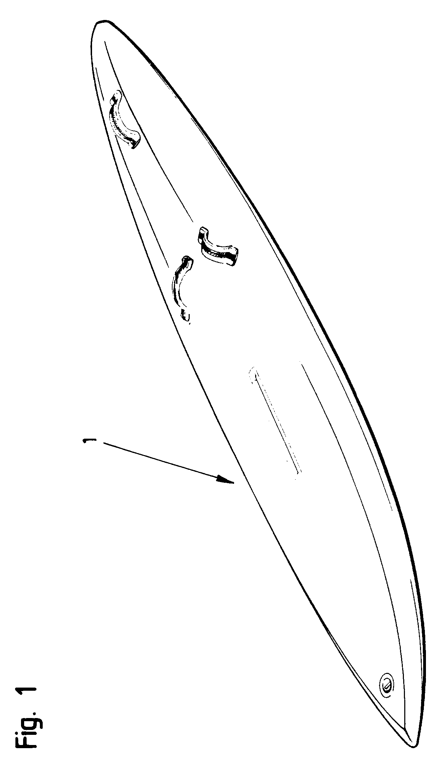

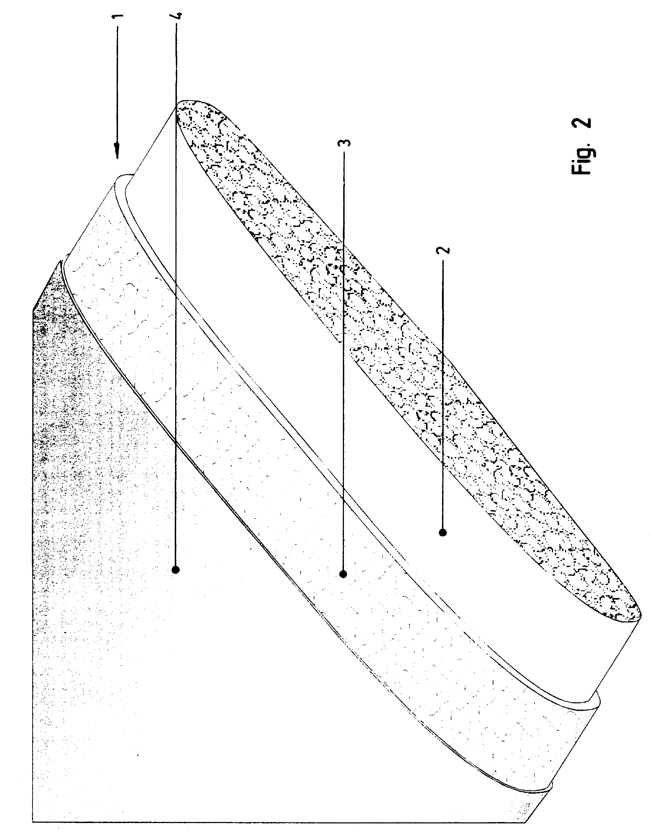

Der in den Fign. 1 und 2 dargestellte Surfbrettkörper 1 besteht aus einem Kern 2 aus einem geschäumten Kunststoff, z.B. Polystyrol, einer Tragschicht 3, die durch auf dem Kern 2 befestigte Fasermatten bzw. ein Fasergewebe aus Kunststoff, z.B. Glasfaser, sowie ein auf den Kern 2 aufgetragenes Kunstharz mit einem Härter mit einer wesentlich höheren Dichte als diejenige des Kerns 2 gebildet wird, sowie aus einer kompakten Außenhaut 4, die aus zwei aus einer Kunststoffolie, z.B. einer ASA-Folie, tiefgezogenen Halbschalen 4a, 4b besteht, die mit dem Kern 2 und der Tragschicht 3 zu einem Verbundkörper verpreßt sind.

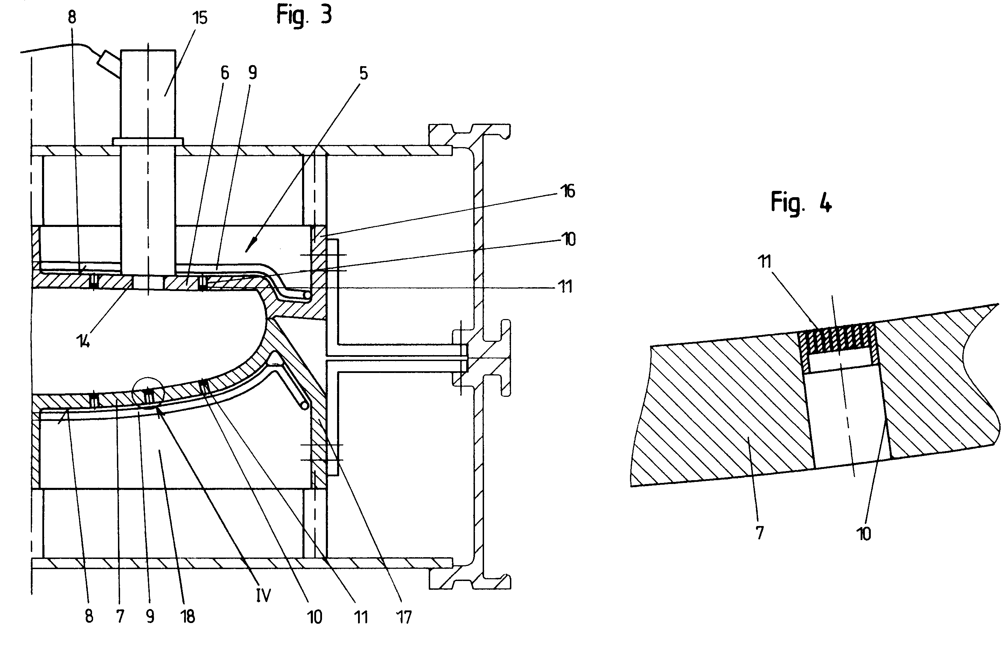

Das aus Aluminiumguß oder Kunststoff gefertigte Formwerkzeug 5 nach Fig. 3 zur Herstellung von Kernen 2 aus geschäumtem Kunststoff für Surfbrettkörper 1 besteht aus zwei Formhälften 6, 7, die mittels auf der Außenseite 8 verlegter Heiz- und Kühlrohre 9 bei der Endfertigung der Surfbrettkörper 1 mit dem entsprechend umgerüsteten Formwerkzeug 5 über getrennte Heiz- und Kühlkreisläufe beheizbar und kühlbar sind.

Die beiden Formhälften 6,7 weisen über die ganze Oberfläche verteilte Bohrungen 10 auf, in die Düsen 11 zur Einleitung von Wasserdampf in das Formwerkzeug 5 eingesetzt sind.

Ferner sind in der Formhälfte 6 Bohrungen 14 angeordnet, die Injektoren 15 zum Einblasen von Kunststoffgranulat in das Formwerkzeug 5 aufnehmen, wobei diese Bohrungen 14 einen größeren Durchmesser aufweisen als die Bohrungen 10 für die Düsen 11.

Die beiden Formhälften 6, 7 des Formwerkzeugs 5 sind zusammen mit den Injektoren 15 mittels zweier als Winkelrahmen ausgebildeter Einbaurahmen 16, 17 in eine Dampfkammer 18 eingebaut.

Zur Herstellung von Kernen 2 wird zunächst vorgeschäumtes Kunststoffgranulat, das ein Treibmittel enthält, mittels Druckluft über die Injektoren 15 in das Formwerkzeug 5 eingeblasen. Anschließend wird Wasserdampf über die Düsen 11 in das Formwerkzeug 5 eingeleitet, um das bereits vorgeschäumte Kunststoffgranulat noch weiter aufzuschäumen.

Nach der Entnahme der Kerne 2 aus dem Formwerkzeug 5 werden diese über einen Zeitraum von ungefähr drei Wochen zwischengelagert, in dem das in den Kernen verbliebene restliche Treibmittel ausdampft. Während der Lagerzeit schrumpfen die Kerne um ungefähr 0,8 % ihres Fertigungsvolumens und verlieren ungefähr 20 % an Gewicht.

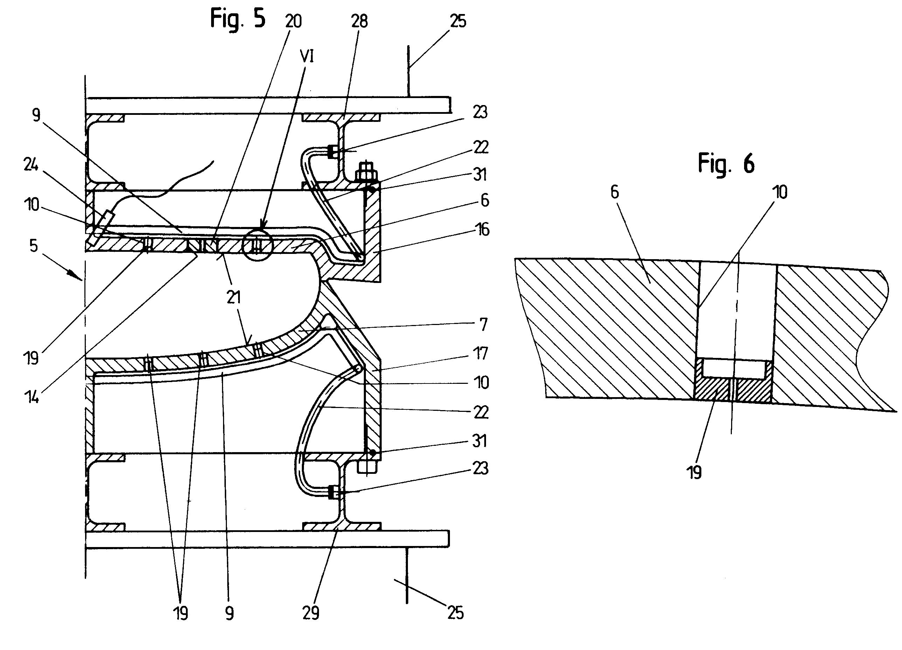

Für die Fertigung von Surfbrettkörpern 1 wird das Formwerkzeug 5 entsprechend der Darstellung in den Fign. 5 und 6 umgerüstet.

Nach dem Entfernen der Düsen 11 und der Injektoren 15 werden die offenen Bohrungen 10, 14 in den beiden Formhälften 6, 7 durch Blinddüsen bzw. Stopfen 19, 20 verschlossen. Danach werden die Stopfen 19, die die Bohrungen 10 in den beiden Formhälften 6, 7 zur Aufnahme der Düsen 11 für die Kernherstellung verschließen, zum Anschluß des Formwerkzeugs 5 an eine Vakuumquelle aufgebohrt (Fig. 6). Gegebenenfalls können zusätzlich die Stopfen 20 zum Verschließen der Bohrungen 14 zur Aufnahme der Injektoren 15 aufgebohrt werden. Nunmehr wird das Formnest 21 geschliffen. Anschließend werden an die Heiz- und Kühlrohre 9 der einzelnen Heiz-Kühlkreisläufe des Formwerkzeugs 5 Verbindungsschläuche 22 angeschlossen, die mit Schlauchkupplungen 23 zum Anschluß der Heizung und Kühlung des Formwerkzeugs 5 an ein Heiz- und Kühlwassersystem ausgestattet sind, und es werden Temperaturfühler 24 zur Steuerung der Heiz- und Kühlkreisläufe in beide Formhälften 6, 7 eingesetzt.

Für den Einbau des Formwerkzeugs 5 in eine Presse 25 werden an den kastenförmigen Einbaurahmen 16, 17, die mit den beiden Formhälften 6, 7 einteilig gegossen sind, Halterahmen 28, 29 aus Doppel-T-Profilen angeschraubt, wobei die Halterahmen 28, 29 mittels einer umlaufenden Dichtung 31 gegen die Einbaurahmen 16, 17 der beiden Formhälften 6, 7 abgedichtet werden.

Die Verwendung des zunächst zur Kernherstellung eingesetzten Formwerkzeugs 5 nach einer Umrüstung für die Fertigung von Surfbrettkörpern 1 erfordert einen Ausgleich der Schwundes der Kerne, der bei der für das vollständige Ausdampfen des Treibmittels und zum Trocknen erforderlichen Zwischenlagerung der Kerne auftritt.

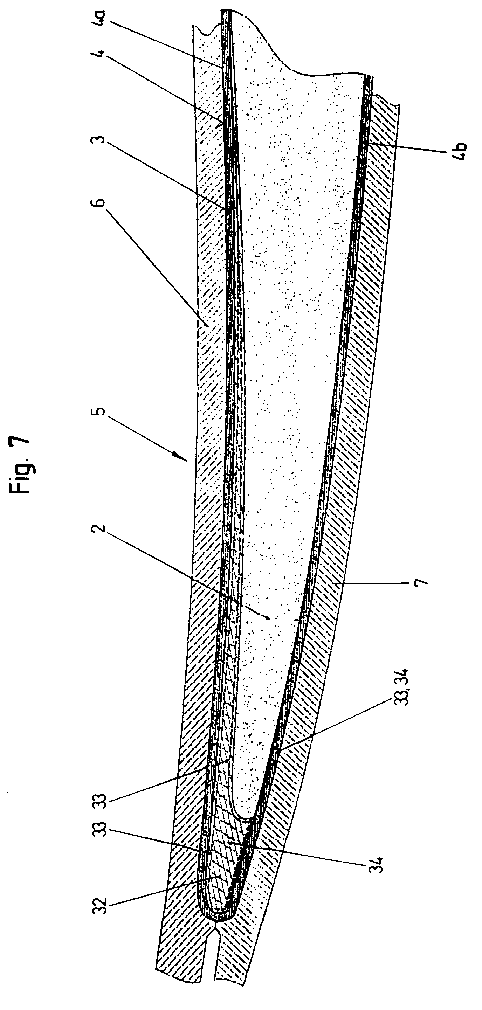

Zum Schwundausgleich wird der Freiraum 32, der durch Einlegen der mit Fasermatten bzw. Fasergewebe 33 belegten und mit einem flüssigen, schäumbaren Kunststoff 34 beschichteten Kerne 2 in das Formwerkzeug 5 unter heckseitiger Anlage an dem Werkzeug entsteht, durch in das Formwerkzeug 5 zusätzlich eingelegte Fasermatten 33 sowie durch Einfüllen von schäumbarem Kunststoff 34 ausgefüllt. Als Füll-Kunststoff wird vorzugsweise der gleiche Kunststoff verwendet, aus dem die Tragschicht 3 der Surfbrettkörper 1 hergestellt wird, wobei dem Füll-Kunststoff zusätzlich Treibmittel beigemischt wird (Fig. 7).

Das Auffüllen des bugseitigen Freiraums 32 des Formwerkzeugs 5 mit einem Kunststoff-Hartschaum erbringt den zusätzlichen Vorteil, daß die Bugspitze des Brettkörpers, die z.B. beim Sturz eines Surfers durch den aufschlagenden Gabelbaum starken Schlag- und Stoßbeanspruchungen unterliegt, eine sehr hohe Festigkeit erhält.

Der Schwund der Kerne 2 kann ferner durch ein bugseitig in das Formwerkzeug 5 eingelegtes, vorgefertigtes Formstück ausgeglichen werden, das mit dem Kern verklebt wird.

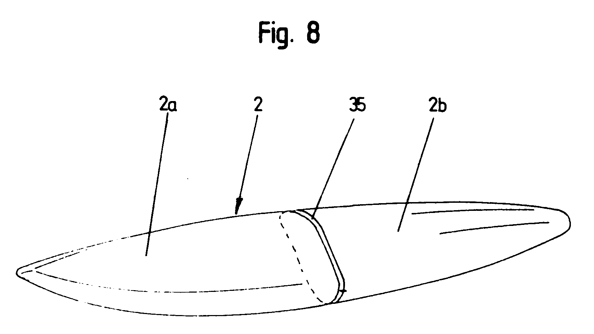

Eine weitere Möglichkeit, den Schwund der Kerne 2 auszugleichen, besteht darin, die Kerne 2 in zwei Hälften 2a, 2b zu teilen und eine dem Querschnittsprofil der Kerne 2 an der Trennstelle angepaßte Scheibe 35 mit den beiden Kernhälften 2a, 2b zu verkleben, wobei die eingesetzte Scheibe 35 ggf. noch durch Abschmirgeln, Abschälen oder dgl. von Überständen über das Kernprofil bearbeitet werden muß (Fig. 8).

Die Fertigung von Surfbrettkörpern 1 mit dem umgerüsteten, in eine Presse eingebauten Formwerkzeug 5 erfolgt nach dem in der Beschreibungseinleitung erläuterten, aus der DE 33 29 230 C2 bekannten Verfahren.

## Patentansprüche

1. Formwerkzeug zur Herstellung von Surfbrettern, das aus zwei beheizbaren Formhälften aus Metall oder Kunststoff besteht, dadurch gekennzeichnet, daß das Formwerkzeug (5) als Kombinationswerkzeug zur Herstellung von Kernen (2) aus schäumbarem Kunststoff für Surfbretter und zur Herstellung der Brettkörper (1) durch Verpressen der mit Fasermatten (33) bzw. Fasergewebe belegten und flüssigem Kunststoff (34) beschichteten Kerne (2) mit zwei die Außenhaut (4) des Surfbrettes bildenden Schalen (4a, 4b) verwendbar ist, die durch Vakuumtiefziehen von Kunststoffolie hergestellt sind, wobei zur Herstellung von Kernen (2) eine Formhälfte (6) Bohrungen (14) zum Einsetzen von Injektoren (15) zum Einblasen von Kunststoffgranulat in das Formwerkzeug (5) aufweist, beide Formhälften (6, 7) weitere Bohrungen (10) zum Einsetzen von Düsen (11) zum Einleiten von Wasserdampf in das Formwerkzeug (5) zum Schäumen des ein Treibmittel enthaltenden Kunststoffgranulats aufweisen und für den Einbau des Formwerkzeugs (5) in eine Dampfkammer (18) beide Formhälften (6, 7) an Einbaurahmen (16, 17) befestigt sind und wobei zur Herstellung der Brettkörper (1) nach dem Entfernen der Düsen (11) und der Injektoren (15) die offenen Bohrungen (10, 14) in den beiden Formhälften (6, 7) mit Stopfen (19, 20) verschlossen werden, die Stopfen (19, 20) zum Anschluß des Formwerkzeugs (5) an eine Vakuumquelle aufgebohrt werden, das Formnest (21) geschliffen wird und für den Einbau des Formwerkzeugs (1) in eine Presse (25) beide Formhälften (6, 7) an Halterahmen (28, 29) befestigt werden.

2. Formwerkzeug nach Anspruch 1, gekennzeichnet durch auf der Außenseite (8) der beiden Formhälften (6, 7) verlegte Heiz- und Kühlrohre (9).

3. Formwerkzeug nach Anspruch 2, gekennzeichnet durch getrennte Heiz- und Kühlkreisläufe zum Beheizen und Kühlen der beiden Formhälften (6, 7).

4. Formwerkzeug nach einem der Ansprüche 2 und 3, gekennzeichnet durch in die beiden Formhälften (6, 7) eingesetzte Temperaturfühler (24) zur Steuerung der Heiz- und Kühlkreisläufe.

5. Verfahren zur Herstellung von Surfbrettern mit dem Formwerkzeug nach Anspruch 1 bis 4, gekennzeichnet durch einen Schwundausgleich der Kerne (2).

6. Verfahren nach Anspruch 5, gekennzeichnet durch einen Schwundausgleich durch Auffüllen des Freiraums (32), der durch Einlegen der mit Fasermatten bzw. Fasergewebe (33) belegten und mit einem flüssigen, schäumbaren Kunststoff (34) beschichteten Kerne (2) in das Formwerkzeug (5) unter heckseitiger Anlage an demselben entsteht, durch in das Formwerkzeug (5) eingelegte Fasermatten bzw. Fasergewebe (33) sowie durch Einfüllen von schäumbarem Kunststoff (34) oder durch Einlegen eines Formteils aus Kunststoff, das mit dem Kern (2) verklebt wird.

7. Verfahren nach Anspruch 5, gekennzeichnet durch das Teilen der Kerne (2) in zwei Hälften (2a, 2b), das Verkleben einer dem Querschnittsprofil der Kerne (2) an der Trennstelle angepaßten Scheibe (35) mit den beiden Kernhälften (2a, 2b) und ggf. das Beiarbeiten der eingesetzten Scheibe (35) durch Abschmirgeln, Abschälen oder dgl. der Überstände derselben über das Kernprofil.
